Europäisches Patentamt

European Patent Office

Office européen des brevets

(11) Veröffentlichungsnummer: **0 467 455 A2**

# EUROPÄISCHE PATENTANMELDUNG

(21) Anmeldenummer: **91201788.6**

(51) Int. Cl.5: **H04N 9/64**

(22) Anmeldetag: **09.07.91**

(30) Priorität: **19.07.90 DE 4022981**

(43) Veröffentlichungstag der Anmeldung:
**22.01.92 Patentblatt 92/04**

(84) Benannte Vertragsstaaten:
**DE FR GB IT**

(71) Anmelder: **Philips Patentverwaltung GmbH
Wendenstrasse 35 Postfach 10 51 49
W-2000 Hamburg 1(DE)**

(84) **DE**

Anmelder: **N.V. Philips' Gloeilampenfabrieken
Groenewoudseweg 1**

**NL-5621 BA Eindhoven(NL)**

(84) **FR GB IT**

(72) Erfinder: **Grigat, Rolf-Rainer, Dr.
Wendlohstrasse 91
W-2000 Hamburg 61(DE)**
Erfinder: **Marwedel, Klaus
Edvard Munch Strasse 16
W-2000 Hamburg 74(DE)**

(74) Vertreter: **von Laue, Hanns-Ulrich et al
Philips Patentverwaltung GmbH,
Wendenstrasse 35, Postfach 10 51 49
W-2000 Hamburg 1(DE)**

(54) **Verfahren zur Reduktion des Farbkantenflackerns in Farbfernsehsignalen.**

(57) Bei einem Verfahren zur Reduktion des Farbkantenflackerns für Bildwiedergabe eines Farbfernsehsignals, in dem Farbinformationen in zwei verschiedenen Farbdifferenzsignalen kodiert übertragen werden, welche einzeln und von Zeile zu Zeile alternierend übertragen werden, ist vorgesehen, daß in jeder Bildzeile für jeden wiederzugebenden Bildpunkt zur Rückgewinnung der Farbinformation dieses Bildpunktes das in seiner Zeile für ihn mitübertragene Farbdifferenzsignal und eine gewichtete Summe der beiden anderen Farbdifferenzsignale der korrespondierenden Bildpunkte der vorigen und der nachfolgenden Bildzeile herangezogen wird, wobei die relative Gewichtung der beiden Farbdifferenzsignale innerhalb der Summe in Abhängigkeit der Werte zweier Wertedifferenzen vorgenommen wird, von denen eine erste Wertedifferenz zwischen dem Farbdifferenzsignal des wiederzugebenden Bildpunktes und desjenigen des korrespondierenden Bildpunktes der vorvorigen Zeile und eine zweite Wertedifferenz zwischen den Farbdifferenzsignalen der mit dem wiederzugebenden Bildpunkt korrespondierenden Bildpunkte der vorigen und der nachfolgenden Bildzeile gebildet wird.

FIG.2

Rank Xerox (UK) Business Services

Die Erfindung betrifft ein Verfahren zur Reduktion des Farbkantenflackerns für Bildwiedergabe eines Farbfernsehsignals, in dem Farbinformationen in zwei verschiedenen Farbdifferenzsignalen kodiert übertragen werden, welche einzeln und von Zeile zu Zeile alternierend übertragen werden und eine Anordnung zur Durchführung dieses Verfahrens.

Eine Farbfernseh-Übertragungsnorm, bei der vorgesehen ist, die Farbinformationen in zwei verschiedenen Farbdifferenzsignalen kodiert zu übertragen, welche jedoch nur einzeln und von Zeile zu Zeile alternierend übertragen werden, ist beispielsweise die SECAM-Norm. In dieser Norm sind zwei Farbdifferenzsignale $U_{B-Y}$ und $U_{R-Y}$ vorgesehen, welche zeilenalternierend übertragen werden. Diese beiden Farbdifferenzsignale werden auch (in normierter, geträgerter Form) als U und V bezeichnet. Die zeilenalternierende Übertragungsweise hat zur Folge, daß in jeder Bildzeile nur eines der beiden Farbdifferenzsignale für die Bildpunkte dieser Zeile mitübertragen wird. Das jeweils andere Farbdifferenzsignal, welches zur Rückgewinnung der vollständigen Farbinformation erforderlich ist, wird daher bei nach dem Stande der Technik bekannten Verfahren und Anordnungen aus dem in der vorigen Zeile übertragenen Farbdifferenzsignal gewonnen. Da die beiden Farbdifferenzsignale zeilenweise alternierend übertragen werden, handelt es sich bei dem Farbdifferenzsignal der vorigen Zeile um das jeweils andere Farbdifferenzsignal, so daß eine Kombination der beiden Farbdifferenzsignale eine Rückgewinnung der Farbinformation gestattet.

Bei dieser Vorgehensweise ergeben sich jedoch spätestens dann Probleme, wenn der Bildinhalt eine horizontal, also in Bildzeilenrichtung, verlaufende Farbkante aufweist. In diesem Falle paßt das von der vorigen Bildzeile übernommene Farbdifferenzsignal nicht zu dem aktuell übertragenen Farbdifferenzsignal, da es zu einem anderen Farbwert gehört. Wird das Farbfernsehsignal in zwei Teilbildern übertragen, wie dies üblich ist, so ergibt sich aufgrund dieses Umstandes ein Flackern der Farbkante bei Bildwiedergabe über drei Vollbildzeilen hinweg. Je nach Bildinhalt tritt dieses Farbkantenflackern störend in Erscheinung.

Es ist Aufgabe der Erfindung, ein Verfahren zur Reduktion dieses Farbkantenflackerns und eine Anordnung zur Durchführung dieses Verfahrens zu schaffen.

Für ein Verfahren zur Reduktion des Farbkantenflackerns ist diese Aufgabe erfindungsgemäß dadurch gelöst, daß in jeder Bildzeile für jeden wiederzugebenden Bildpunkt zur Rückgewinnung der Farbinformation dieses Bildpunktes das in seiner Zeile für ihn mitübertragene Farbdifferenzsignal und eine gewichtete Summe der beiden anderen Farbdifferenzsignale der korrespondierenden Bildpunkte der vorigen und der nachfolgenden Bildzeile herangezogen wird, wobei die relative Gewichtung der beiden Farbdifferenzsignale innerhalb der Summe in Abhängigkeit der Werte zweier Wertedifferenzen vorgenommen wird, von denen eine erste Wertedifferenz zwischen dem Farbdifferenzsignal des wiederzugebenden Bildpunktes und desjenigen des korrespondierenden Bildpunktes der vorvorigen Zeile und eine zweite Wertedifferenz zwischen den Farbdifferenzsignalen der mit dem wiederzugebenden Bildpunkt korrespondierenden Bildpunkte der vorigen und der nachfolgenden Bildzeile gebildet wird.

In dem Bild in Zeilenrichtung verlaufende Farbkanten können in jedem Falle ein Farbkantenflackern bei der Bildwiedergabe hervorrufen, wenn für einen bestimmten Bildpunkt in einer Bildzeile neben dem gemeinsam mit ihm übertragenen Farbdifferenzsignal das andere Farbdifferenzsignal aus der vorigen Bildzeile gewonnen wird. Entsprechendes gilt auch, wenn statt des Farbdifferenzsignals des korrespondierenden Bildpunktes der vorigen Bildzeile das der nachfolgenden Bildzeile herangezogen würde. Um dieses Problem zu umgehen, ist daher vorgesehen, die Farbdifferenzsignale der korrespondierenden Bildpunkte sowohl der vorigen wie auch der nachfolgenden Bildzeile zur Gewinnung desjenigen Farbdifferenzsignals heranzuziehen, welches in der Bildzeile eines bestimmten Bildpunktes nicht mitübertragen wurde. Es werden dabei die Farbdifferenzsignale derjenigen Bildpunkte der vorigen und der nachfolgenden Bildzeile herangezogen, welche innerhalb der Bildzeile die gleiche Position aufweisen, wie derjenige Bildpunkt, für den die Farbinformation zurückgewonnen werden soll. Diese korrespondierenden Bildpunkte liegen also bei normaler Darstellung der Bildzeilen in horizontaler Richtung vertikal übereinander. Es wird nun aus den Farbdifferenzsignalen der korrespondierenden Bildpunkte der vorigen und der nachfolgenden Bildzeile eine gewichtete Summe gebildet, d.h. es wird eine Summe der beiden Farbdifferenzsignale gebildet, in die die Werte der beiden Farbdifferenzsignale der korrespondierenden Bildpunkte der vorigen und der nachfolgenden Bildzeile in veränderbarer Gewichtung eingehen. Diese Gewichtung wiederum ist abhängig von den Werten zweier Wertedifferenzen. Die erste dieser beiden Wertedifferenzen wird durch Differenzbildung zwischen dem Farbdifferenzsignal des wiederzugebenden Bildpunktes und dem Farbdifferenzsignal des korrespondierenden Bildpunktes der vorigen Zeile gebildet. Die zweite Wertedifferenz wird durch Differenzbildung der Farbdifferenzsignale zweier Bildpunkte der vorigen und der nachfolgenden Zeile gebildet, welche mit dem wiederzugebenden Bildpunkt korrespondieren, also gleiche Positionen innerhalb ihrer Zeilen aufweisen, wie der Bildpunkt, für den die Farbinformation zurückgewonnen werden soll.

Die Größe dieser beiden Wertedifferenzen, die ein Maß dafür ist, wie stark sich die Farbinformation in vertikaler Richtung, d.h. also einer Richtung quer zur Bildzeilenrichtung, verändert, wird nun zur Gewichtung der beiden Farbdifferenzsignale innerhalb der oben beschriebenen Summe herangezogen. Auf diese Weise wird das für den wiederzugebenden Bildpunkt nicht mitübertragene Farbdifferenzsignal aus einer Kombination der Farbdifferenzsignale der korrespondierenden Bildpunkte der vorigen und der nachfolgenden Bildzeile gewonnen, wobei die Gewichtung der beiden Farbdifferenzsignale von den Werten der Wertedifferenzen, also vom Bildinhalt, genauer vom Farb-Bildinhalt, bestimmt wird. Die grundsätzliche Erkenntnis, die der Erfindung zugrundeliegt, besteht also darin, daß das für den jeweils wiederzugebenden Bildpunkt nicht mitübertragene Farbdifferenzsignal nicht in festgelegter Weise entweder vom korrespondierenden Bildpunkt der vorigen oder der nachfolgenden Bildzeile gewonnen werden sollte, sondern daß die Art der Gewinnung dieses nicht mitübertragenen Farbdifferenzsignals zur Unterdrückung des Farbkantenflackerns vorteilhaft in Abhängigkeit der übertragenen Farbinformation gewonnen werden kann, wobei für benachbarte Zeilen festgestellt wird, ob sich das Farbdifferenzsignal in einer Weise ändert, daß auf das Vorliegen der Farbkante geschlossen werden kann. In Abhängigkeit dieser Information wird die Gewichtung der Farbdifferenzsignale der korrespondierenden Bildpunkte der vorigen und der nachfolgenden Bildzeile zur Gewinnung des für den wiederzugebenden Bildpunkt nicht mitübertragenen Farbdifferenzsignals gewonnen.

Bei der vorigen, nachfolgenden bzw. vorvorigen Bildzeile handelt es sich immer um die betreffende Bildzeile in demselben Bild, in dem die Bildzeile des wiederzugebenden Bildpunktes sich befindet. Daher ist nach einer Ausgestaltung der Erfindung für ein Fernsehsignal, in welchem ein Vollbild aus zwei nacheinander übertragenen und im Zwischenzeilenverfahren dargestellten Teilbilder aufgebaut ist, innerhalb welcher die beiden Farbdifferenzsignale zeilenalternierend übertragen werden, vorgesehen, daß es sich bei den korrespondierenden Bildpunkten der vorigen, der nachfolgenden bzw. der vorvorigen Bildzeile um diejenigen der betreffenden (Teil-)Bildzeilen desselben Teilbildes handelt, in dem sich die (Teil-)Bildzeile des wiederzugebenden Bildpunktes befindet.

Handelt es sich also bei dem Farbfernsehsignal um eines, in dem ein Vollbild in zwei nacheinander übertragenen Teilbildern übertragen wird, die im Zwischenzeilenverfahren ineinander verschachtelt dargestellt werden, so bezieht sich die Angabe "Bildzeile" auf Bildzeilen eines Teilbildes und nicht eines Vollbildes. So wird beispielsweise die zweite Wertedifferenz in diesem Fall zwischen den mit dem wiederzugebenden Bildpunkt korrespondierenden Bildpunkten der vorigen und der nachfolgenden (Teil-)Bildzeile desselben Teilbildes gebildet.

Dieses Verfahren ist beispielsweise für Farbfernsehsignale der SECAM-Norm einsetzbar, deren Signale normalerweise im Zwischenzeilenverfahren übertragen werden, wobei die Teilbilder mit einer Frequenz von 50 Hz übertragen werden. In diesem Beispielsfall würde bei Anordnungen nach dem Stande der Technik an Farbkanten ein Flackern über drei Vollbildzeilenabstände auftreten. Dieses Flackern hat eine Frequenz von 12,5 Hz, ist also deutlich sichtbar und störend. Durch das erfindungsgemäße Verfahren wird dieses Flackern über drei Vollbildzeilenabstände reduziert auf ein Flackern über ein Vollbildzeilenabstand. Außerdem tritt dieses Flackern nur noch mit einer Frequenz von 25 Hz auf, ist also schon von daher weniger sichtbar. Der Haupteffekt besteht jedoch darin, daß die Farbkante nicht mehr über drei Vollbildzeilen sondern nur noch über eine Vollbildzeile wechselt. Wird zusätzlich zu dem erfindungsgemäßen Verfahren noch eine Wandlung auf eine 100 Hz Teilbildwiedergabe vorgenommen, wie dies immer mehr üblich wird, so tritt das Flackern der Farbkante nur noch mit einer Frequenz von 50 Hz auf, die praktisch nicht mehr sichtbar ist.

Ein weiterer Vorteil des erfindungsgemäßen Verfahrens besteht darin, daß es uneingeschränkt sowohl für analog als auch für digital aufgebaute Schaltungsanordnungen eines Gerätes zur Bildwiedergabe geeignet ist.

In einer vorteilhaften Ausgestaltung des Verfahrens ist vorgesehen, daß die relative Gewichtung der beiden Farbdifferenzsignale innerhalb der Summe in der Weise vorgenommen wird, daß bei relativ großen Werten der beiden Wertedifferenzen das Farbdifferenzsignal des korrespondierenden Bildpunktes der nachfolgenden Bildzeile in der Summe überwiegt und daß bei relativ kleinen Werten der beiden Wertedifferenzen das Farbdifferenzsignal des korrespondierenden Bildpunktes der vorigen Bildzeile überwiegt.

Die relative Gewichtung der beiden Farbdifferenzsignale innerhalb der Summe kann in verschiedener Weise vorgenommen werden. Für die meisten Einsatzzwecke wird es jeodch vorteilhaft sein, bei relativ großen Werten der beiden Wertedifferenzen die relative Gewichtung der beiden Farbdifferenzsignale innerhalb der Summe so vorzunehmen, daß in dieser Summe das Farbdifferenzsignal des korrespondierenden Bildpunktes der nachfolgenden Bildzeile überwiegt. Weisen nämlich beide Wertedifferenzen relativ große Werte auf, so kann daraus geschlossen werden, daß zwischen der vorigen Bildzeile, d.h. also bei üblicher Wiedergabe der Bildzeile oberhalb der wiederzugebenden Bildzeile, und der wiederzugebenden Bildzeile eine Farbkante verläuft. Würde in diesem Falle das Farbdifferenzsignal des korrespondierenden Bildpunktes der vorigen Bildzeile zur Rückgewinnung der Farbinformation mit herangezogen, so würde sich das oben beschriebene Farbkantenflackern ergeben. In diesem Falle ist es daher vorteilhaft, in der Summe das Farbdifferenzsignal des korrespondierenden Bildpunktes der nachfolgenden Zeile überwiegen zu lassen.

Weisen jedoch die beiden Wertedifferenzen relativ kleine Werte auf, so deutet dies daraufhin, daß die Farbinformationen des wiederzugebenden Bildpunktes und die des korrespondierenden Bildpunktes der vorigen Zeile sich relativ wenig voneinander unterscheiden und daß zwischen diesen beiden Bildzeilen mit großer Wahrscheinlichkeit keine Farbkante verläuft. In diesem Fall überwiegt innerhalb der Summe der Wert des Farbdifferenzsignals des korrespondierenden Bildpunktes der vorigen Bildzeile.

Dieses Grundprinzip ist in den meisten Anwendungsfällen vorteilhaft, da auf diese Weise eine zwischen der wiederzugebenden Bildzeile und der darüber verlaufenden, vorigen Bildzeile verlaufende Farbkante detektiert und die Rückgewinnung des in der wiederzugebenden Bildzeile nicht mitübertragenen Farbdifferenzsignals in Abhängigkeit dieser Detektion vorgenommen wird.

Die relative Gewichtung der beiden Farbdifferenzsignale innerhalb der Summe kann unter Einhaltung der oben beschriebenen Vorgehensweise in verschiedener Ausgestaltung vorgenommen werden. Auf einige besonders vorteilhafte Varianten soll im folgenden näher eingegangen werden.

So ist nach einer vorteilhaften Ausgestaltung der Erfindung vorgesehen, daß die Summe ausschließlich aus dem Farbdifferenzsignal des korrespondierenden Bildpunktes der nachfolgenden Bildzeile gebildet wird, wenn beide Wertedifferenzen einen vorgebbaren ersten Schwellwert überschreiten.

Wie oben erläutert wurde, kann aus einem relativ großen Wert der beiden Wertedifferenzen auf das Vorliegen einer Farbkante zwischen der wiederzugebenden Bildzeile und der vorigen Bildzeile geschlossen werden. In diesem Falle kann die relative Gewichtung der beiden Farbdifferenzsignale innerhalb der Summe in einfacher Weise dadurch vorgenommen werden, daß in der Summe ausschließlich das Farbdifferenzsignal des korrespondierenden Bildpunktes der nachfolgenden Bildzeile berücksichtigt wird, d.h. also, daß dasjenige Farbdifferenzsignal des korrespondierenden Bildpunktes der vorigen Bildzeile mit der Gewichtung Null in die Summe eingeht. Als Maßstab hierfür kann ein erster Schwellwert vorgegeben werden, der so gewählt ist, daß sicher auf das Vorliegen einer Farbkante geschlossen werden kann, wenn beide Wertedifferenzen diesen ersten Schwellwert überschreiten. In diesem Fall ist es vorteilhaft, das nichtübertragene Farbdifferenzsignal ausschließlich aus demjenigen Farbdifferenzsignal des korrespondierenden Bildpunktes der nachfolgenden Teile zu gewinnen.

In einer weiteren Ausgestaltung ist vorgesehen, daß die Summe ausschließlich aus dem Farbdifferenzsignal des korrespondierenden Bildpunktes der vorigen Bildzeile gewonnen wird, wenn beide Wertedifferenzen einen vorgebbaren zweiten Schwellwert unterschreiten.

Es kann ein zweiter Schwellwert vorgegeben werden, welcher niedrig gewählt wird. Unterschreiten beide Wertedifferenzen diesen Schwellwert, so kann mit Sicherheit darauf geschlossen werden, daß zwischen der wiederzugebenden Bildzeile und der vorigen Bildzeile keine Farbkante verläuft. In diesem Falle kann das fehlende Farbdifferenzsignal ausschließlich aus dem Farbdifferenzsignal des korrespondierenden Bildpunktes der vorigen Bildzeile gewonnen werden.

Nach einer weiteren Ausgestaltung ist vorgesehen, daß der erste und der zweite Schwellwert identische Werte aufweisen. Dies läuft letztlich darauf hinaus, daß nur ein Schwellwert vorgesehen ist, und daß, wenn beide Wertedifferenzen diesen Schwellwert überschreiten, die Summe ausschließlich aus dem Farbdifferenzsignal des korrespondierenden Bildpunktes der nachfolgenden Zeile gewonnen wird und daß, wenn beide Wertedifferenzen diesen Schwellwert unterschreiten, die Summe ausschließlich aus dem Farbdifferenzsignal des korrespondierenden Bildpunktes der vorigen Bildzeile gewonnen wird. Für die Rückgewinnung der Farbinformation eines wiederzugebenden Bildpunktes wird hier also das fehlende Farbdifferenzsignal in harter Umschaltung entweder aus dem Farbdifferenzsignal des korrespondierenden Bildpunktes der vorigen oder dem des nachfolgenden Bildzeile gewonnen. Diese Vorgehensweise bedingt nur einen relativ einfachen Schaltungsaufbau und liefert bereits sehr gute Ergebnisse, da auch diese Vorgehensweise es gestattet, die Art der Gewinnung des mit dem wiederzugebenden Bildpunktes nicht mitübertragegenen Farbdifferenzsignals vom Bildinhalt bzw. von der Existenz einer Farbkante abhängig zu machen.

In einer Ausgestaltung des Verfahrens ist erfindungsgemäß vorgesehen, daß das für jeden Bildpunkt einer Bildzeile ermittelte Vergleichsergebnis zwischen der zweiten Wertedifferenz und dem oder den Schwellwerten als Kantensignal abgespeichert und in der nachfolgenden Bildzeile für den jeweils korrespondierenden Bildpunkt als Vergleichsergebnis dessen erster Wertedifferenz mit dem oder den Schwellwerten dient.

Grundsätzlich sind für jeden wiederzugebenden Bildpunkt die beiden oben beschriebenen Wertedifferenzen zu bilden. Es ist jedoch so, daß die zweite Wertedifferenz für einen bestimmten wiederzugebenden Bildpunkt einer Bildzeile identisch ist mit der ersten Wertedifferenz des korrespondierenden Bildpunktes der nachfolgenden Bildzeile. Diese beiden Wertedifferenzen werden zwischen identischen Werten der Farbdifferenzsignale gebildet. Ist es darüber hinaus in oben beschriebener Weise vorgesehen, die relative Gewichtung der beiden Farbdifferenzsignale innerhalb der Summe in Abhängigkeit eines oder mehrerer Schwellwerte vorzunehmen, so kann das Ergebnis des für einen bestimmten Bildpunkt einer Bildzeile ermittelten Vergleichsergebnisses dessen zweiter Wertedifferenz mit dem oder den Schwellwerten als Kantensignal abgespeichert werden. Für den korrespondierenden Bildpunkt der nachfolgenden Bildzeile dient dann dieses abgespeicherte Ergebnis als Vergleichsergebnis dessen erster Wertedifferenz mit dem oder den Schwellwerten. Dies ist wie gesagt möglich, weil zweite Wertedifferenz des Bildpunktes der vorigen Bildzeile für den nunmehr wiederzugebenden korrespondierenden Bildpunkten der nachfolgenden Bildzeile als erste Wertedifferenz benötigt wird. Wird die relative Gewichtung der beiden Farbdifferenzsignale in Abhängigkeit von Vergleichen der Wertedifferenzen mit Schwellwerten vorgenommen, so können diese Vergleichsergebnisse abgespeichert werden und es ist nicht erforderlich, die Wertedifferenzen selbst abzuspeichern. Im Ergebnis muß also für jede neu wiederzugebende Bildzeile nur eine Wertedifferenz gebildet werden und diese mit dem oder den Schwellwerten verglichen werden. Das Vergleichsergebnis der anderen Wertedifferenz, das von dem jeweils korrespondierenden Bildpunkt der vorigen Bildzeile herrührt, braucht nicht neu berechnet zu werden.

In einer weiteren Ausgestaltung der Erfindung ist vorgesehen, daß die relative Gewichtung der beiden Farbdifferenzsignale innerhalb der Summe gemäß einer Kennlinie vorgenommen wird, welche in Abhängigkeit der Werte der Wertedifferenzen verschiedene Gewichtungen der beiden Farbdifferenzsignale innerhalb der Summe vorgibt.

Es wurden bisher einige vorteilhafte Möglichkeiten beschrieben, wie die Gewichtung der beiden Farbdifferenzsignale innerhalb der Summe in Abhängigkeit von einem oder mehreren Schwellwerten vorgenommen werden kann. Darüber hinaus besteht die Möglichkeit, die Gewichtung der beiden Farbdifferenzsignale innerhalb der Summe gemäß einer Kennlinie vorzunehmen. In diesem Falle wird in Abhängigkeit der Werte der Wertedifferenzen eine verschiedene Gewichtung der beiden Farbdifferenzsignale innerhalb der Summe durch die Kennlinie vorgegeben werden. Auf diese Weise ist eine noch feinere Anpassung der Gewichtung der beiden Farbdifferenzsignale an den gegebenen Bildinhalt möglich. Diese relative Gewichtung anhand einer Kennlinie kann auch zusätzlich zu der oben beschriebenen Gewichtung in Abhängigkeit von Schwellwerten vorgenommen werden. So kann beispielsweise für sehr hohe oder sehr niedrige Werte der beiden Wertedifferenzen je ein Schwellwert vorgesehen sein, bei dem ausschließlich auf das Farbdifferenzsignal des korrespondierenden Bildpunktes der nachfolgenden bzw. der vorigen Bildzeile geschaltet wird. In dem Wertebereich der Wertedifferenzen zwischen diesen beiden Schwellwerten kann eine Gewichtung gemäß einer Kennlinie vorgenommen werden.

Der grundsätzliche Vorteil der Gewichtung der beiden Farbdifferenzsignale gemäß einer Kennlinie besteht darin, daß diese Kennlinie so ausgelegt werden kann, daß bei in dem Farbfernsehsignal bzw. in den Farbdifferenzsignalen vorhandenem Rauschen nicht entlang einer Farbkante eine ständige Umschaltung oder deutliche Umverlagerung der Gewichtung der beiden Farbdifferenzsignale innerhalb der Summe vorgenommen wird. Bei geschickter Auslegung der Kennlinie kann also ein Rauschen an einer Farbkante so unterdrückt werden, daß ein gemäß dieses Verfahrens wiedergegebenes Bild eine sauber verlaufende Farbkante aufweist, an der ein Rauschen nicht mehr erkennbar ist.

Auch in dem Falle, daß die relative Gewichtung der beiden Farbdifferenzsignale innerhalb der Summe gemäß einer Kennlinie vorgenommen wird, gilt der Zusammenhang, daß die für einen Bildpunkt einer Bildzeile ermittelte zweite Wertedifferenz für den jeweils korrespondierenden Bildpunkt der nachfolgenden Bildzeile dessen erste Wertedifferenz darstellt. Es ist daher in einer vorteilhaften Ausgestaltung vorgesehen, daß die für jeden Bildpunkt einer Bildzeile ermittelte zweite Wertedifferenz abgespeichert und für den jeweils korrespondierenden Bildpunkt der nachfolgenden Bildzeile als dessen erste Wertedifferenz dient.

Für eine Schaltungsanordnung zur Durchführung des erfindungsgemäßen Verfahrens ist ferner vorgesehen, daß jedem der beiden Farbdifferenzsignale je ein Zeilenspeicher zugeordnet ist, in dem das jeweils zugeordnete Farbdifferenzsignal für alle Bildpunkte einer Bildzeile immer dann neu eingeschrieben wird, wenn eine neue Bildzeile mit dem jeweils zugeordneten Farbdifferenzsignal übertragen wird, und daß Mittel zum Berechnen der Wertedifferenzen vorgesehen sind, zu deren Ermittlung die in den Zeilenspeichern abgespeicherten Werte der Farbdifferenzsignale herangezogen werden.

Die für die Berechnung der beiden Wertedifferenzen erforderlichen Werte der Farbdifferenzsignale müssen zwischengespeichert werden. Zu diesem Zweck sind zwei Zeilenspeicher vorgesehen, von denen jeder einem Farbdifferenzsignal zugeordnet ist. In die Speicher wird dann das jeweils zugeordnete Farbdifferenzsignal für alle Bildpunkte einer Bildzeile immer dann neu eingeschrieben, wenn eine neue Bildzeile mit dem dem Speicher zugeordneten Farbdifferenzsignal übertragen wird. Da die beiden Farbdifferenzsignale zeilenalternierend im Wechsel einzeln übertragen werden, wird also ein Zeilenspeicher mit jeder zweiten Bildzeile, gegebenenfalls eines Teilbildes, neu beschrieben. In der Zwischenzeit können die in den beiden Zeilenspeichern abgespeicherten Werte der Farbdifferenzsignale jederzeit ausgelesen werden. Dies geschieht durch Mittel zum Berechnen der Wertedifferenzen, die aus den abgespeicherten bzw. den aktuell übertragenen Farbdifferenzsignalen die Wertedifferenzen berechnen. Der Vorteil dieser Anordnung liegt vor allem darin, daß nur zwei Zeilenspeicher erforderlich sind. Insbesondere ist kein Teilbild- oder gar Vollbildspeicher erforderlich. Die zwei Zeilenspeicher sind in Mehrstandard-Dekodern meist ohnehin vorgesehen, da sie zur Dekodierung von Signalen der PAL-Norm benötigt werden.

Für die Schaltungsanordnung ist in einer weiteren Ausgestaltung der Erfindung vorgesehen, daß die in den beiden Zeilenspeichern abgespeicherten Werte der Farbdifferenzsignale zwecks Bildwiedergabe zeitlich verzögert ausgelesen werden, so daß eine in einer Bildzeile übertragene Farbinformation mit einer zeitlichen Verzögerung der Dauer einer Bildzeile wiedergegeben wird, daß Mittel vorgesehen sind, welche für jeden Bildpunkt der dargestellten Bildzeile die Berechnung der zweiten Wertedifferenz vornehmen, diese mit dem Schwellwert vergleichen und das so ermittelte Kantensignal in einem Kantensignalspeicher abspeichern und daß eine Bild-Steuerung vorgesehen ist, welche für jeden Bildpunkt der wiederzugebenden Zeile zur Rückgewinnung von dessen Farbinformation in Abhängigkeit des aktuell ermittelten Kantensignals und des aus dem Kantensignalspeicher ausgelesenen Kantensignals eine Umschaltung zwischen dem Farbdifferenzsignal des korrespondierenden Bildpunktes der vorigen oder der nachfolgenden Zeile vornimmt.

Diese Schaltungsanordnung ist für den Fall vorgesehen, daß die Gewichtung der beiden Farbdifferenzsignale innerhalb der Summe ausschließlich in Abhängigkeit eines oder mehrerer Schwellwerte vorgenommen wird. Die in die beiden Zeilenspeicher in oben beschriebener Weise eingelesenen Werte der Farbdifferenzsignale werden für die Bildwiedergabe zeitlich so verzögert ausgelesen, daß eine in einer Bildzeile übertragene Farbinformation mit einer zeitlichen Verzögerung der Dauer einer Bildzeile wiedergegeben wird. Da, wie oben beschrieben, die Farbdifferenzsignale einer bestimmten Art nur jeweils in jeder zweiten Bildzeile übertragen werden, ergibt sich auf diese Weise die Möglichkeit, daß zu dem Zeitpunkt, zu dem ein bestimmter Bildpunkt einer Bildzeile wiedergegeben wird, die Farbdifferenzsignale der korrespondierenden Bildpunkte sowohl der nachfolgenden wie auch der vorigen Zeile zur Verfügung stehen. Das Farbdifferenzsignal der vorigen Zeile wurde nämlich bereits zuvor in den zugeordneten Zeilenspeicher eingelesen. Das Farbdifferenzsignal der nachfolgenden Zeile wird zu dem Zeitpunkt aktuell übertragen, zu dem der wiederzugebende Bildpunkt dargestellt wird, da ja die Darstellung des wiederzugebenden Bildpunktes um die Dauer einer Bildzeile verzögert wird. Es stehen somit zum Zeitpunkt der Wiedergabe des darzustellenden Bildpunktes die beiden Farbdifferenzsignale der korrespondierenden Bildpunkte der vorigen und der nachfolgenden Zeile zur Verfügung. Es kann also die zweite Wertedifferenz für den wiederzugebenden Bildpunkt aktuell berechnet werden. Diese Wertedifferenz wird mit dem Schwellwert verglichen und als Kantensignal abgespeichert. Für den korrespondierenden Bildpunkt der nachfolgenden Zeile wird wiederum dessen zweite Wertedifferenz in gleicher Weise aktuell berechnet. Dessen erste Wertedifferenz ist jedoch identisch mit der zuvor berechneten zweiten Wertedifferenz des korrespondierenden Bildpunktes der vorigen Zeile. Das Vergleichsergebnis dieser zweiten Wertedifferenz des korrespondierenden Bildpunktes der vorigen Zeile mit dem Schwellwert wurde als Kantensignal abgespeichert. Für die nachfolgende Bildzeile kann dieses Kantensignal ausgelesen werden und als Vergleichsergebnis dessen erster Wertedifferenz mit dem Schwellwert dienen. Somit ist also für jeden wiederzugebenden Bildpunkt jeweils die zweite Wertedifferenz neu zu berechnen, während das Vergleichsergebnis dessen erster Wertedifferenz bereits als Kantensignal in dem Kantensignalspeicher vorliegt. Anhand des Vergleichs der aktuell ermittelten zweiten Wertedifferenz mit dem Schwellwert und des aus dem Kantensignalspeicher ausgelesenen Kantensignals kann nun nach der oben beschriebenen Vorgehensweise die Umschaltung zwischen dem Farbdifferenzsignal des korrespondierenden Bildpunktes der vorigen und der nachfolgenden Zeile vorgenommen werden. Dieses Farbdifferenzsignal des Bildpunktes der vorigen oder nachfolgenden Zeile wird dann neben dem gemeinsam mit dem wiederzugebenden Bildpunkt übertragenen Farbdifferenzsignal zur Rückgewinnung der Farbinformation herangezogen.

In einer weiteren Ausführungsform der Schaltungsanordnung ist für den Fall, daß die relative Gewichtung der beiden Farbdifferenzsignale anhand einer Kennlinie vorgenommen werden soll, vorgesehen, daß die in den beiden Zeilenspeichern abgespeicherten Werte der Farbdifferenzsignale zwecks Bildwiedergabe zeitlich verzögert ausgelesen werden, so daß eine in einer Bildzeile übertragenen Farbinformation mit einer zeitlichen Verzögerung der Dauer einer Bildzeile wiedergegeben wird, daß Mittel vorgesehen sind, welche für jeden Bildpunkt der dargestellten Bildzeile die Berechnung der zweiten Wertedifferenz vornehmen, diese in einem Differenzwertspeicher abspeichern und daß eine Bild-Steuerung vorgesehen ist, welche für jeden Bildpunkt der wiederzugebenden Zeile zur Rückgewinnnung von dessen Farbinformation in Abhängigkeit dessen aktuell berechneter zweiter Wertedifferenz und der in dem Differenzwertspeicher abgespeicherten ersten Wertedifferenz gemäß der Kennlinie die relative Gewichtung der beiden Farbdifferenzsignale in der Summe vornimmt.

Für die Verzögerung der Darstellung der Bildpunkte um die Dauer einer Bildzeile gilt auch für diese Ausführungsform der Schaltungsanordnung das oben Gesagte. Auch hier gilt wieder, daß zum Zeitpunkt der Wiedergabe eines bestimmten Bildpunktes die Farbdifferenzsignale der korrespondierenden Bildpunkte der vorigen und der nachfolgenden Bildzeile zur Berechnung der zweiten Wertedifferenz zur Verfügung stehen. Soll die Gewichtung der beiden Farbdifferenzsignale innerhalb der Summe in Abhängigkeit einer Kennlinie vorgenommen werden, so muß in diesem Falle die ermittelte zweite Wertedifferenz selbst abgespeichert werden. Dazu ist ein Differenzwertspeicher vorgesehen. Auch in dieser Ausführungsform muß für jeden wiederzugebenden Bildpunkt nur jeweils die zweite Wertedifferenz neu berechnet werden, da die zweite Wertedifferenz des jeweils korrespondierenden Bildpunktes der vorigen Zeile, die in dem Differenzwertspeicher abgespeichert wurde, für den wiederzugebenden Bildpunkt als erste Wertedifferenz herangezogen werden kann. Es liegen also für jeden wiederzugebenden Bildpunkt beide Differenzwerte vor, und es kann somit entsprechend der Kennlinie eine Gewichtung vorgenommen werden. Wie oben bereits erläutert, wird die in einer Bildzeile übertragene Farbinformation, d.h. also, das in dieser Bildzeile übertragene Farbdifferenzsignal, mit einer zeitlichen Verzögerung der Dauer einer Bildzeile wiedergegeben, um die gleichzeitige Berechnung des zweiten Differenzwertes zu ermöglichen. Es tritt somit eine Verschleifung der Farbinformation relativ zu dem Helligkeitssignal um eine Zeile auf. Diese Verschleifung stört normalerweise nicht, kann jedoch, wie nach einer weiteren Ausgestaltung der Erfindung vorgesehen ist, dadurch vermieden werden, daß ein Zeilenspeicher für das in dem Farbfernsehsignal enthaltene Helligkeitssignal vorgesehen ist, welcher dazu dient, das übertragene Helligkeitssignal ebenso wie die Farbinformation mit einer zeitlichen Verzögerung der Dauer einer Bildzeile zur Bildwiedergabe bereitzustellen.

Für diejenige Ausführungsform der Schaltungsanordnung, bei der die relative Gewichtung der beiden Farbdifferenzsignale innerhalb der Summe durch einfaches Umschalten zwischen beiden Farbdifferenzsignalen vorgenommen wird, ist nach einer Ausgestaltung vorgesehen, daß zur Umschaltung zwischen den Farbdifferenzsignalen der korrespondierenden Bildpunkte der vorigen oder der nachfolgenden Bildzeile zwei Multiplexer vorgesehen sind.

Jeder dieser beiden Multiplexer dient dabei dazu, zwischen dem aus dem ihm zugeordneten Zeilenspeicher ausgelesenen Farbdifferenzsignal und dem übertragenen Farbdifferenzsignal umzuschalten.

Soll die relative Gewichtung der beiden Farbdifferenzsignale innerhalb der Summe anhand einer Kennlinie vorgenommen werden, so ist eine beliebige Verschiebung der Gewichtung beider Farbdifferenzsignale erforderlich. Dies kann, wie nach einer weiteren Ausgestaltung vorgesehen ist, dadurch geschehen, daß zur relativen Gewichtung der beiden Farbdifferenzsignale den Zeilenspeichern je zwei Multiplizierer und ein Addierer nachgeschaltet sind. Die beiden Multiplizierer dienen dabei dazu, das aus dem Zeilenspeicher ausgelesene Farbdifferenzsignal und das jeweils übertragene Farbdifferenzsignal mit einem Faktor zwischen 0 und 1 zu multiplizieren. Anschließend werden diese beiden multiplizierten Signale dem Addierer zugeführt. Es kann somit eine beliebige Gewichtung zwischen den beiden Farbdifferenzsignalen vorgenommen werden.

Nach einer weiteren Ausgestaltung der Erfindung ist vorgesehen, daß die Schaltungsanordnung einem Bildspeicher nachgeschaltet ist. Wird beispielsweise durch den Bildspeicher eine Verdoppelung der Vertikalfrequenz des wiederzugebenden Fernsehsignals vorgenommen, so kann die erfindungsgemäße Schaltungsanordnung auch hier mit Vorteil eingesetzt werden, da die Reduktion des Farbkantenflackerns in gleicher Weise eintritt, aufgrund der durch den Bildspeicher erhöhten Vertikalfrequenz das noch verbleibende Farbkantenflakkern nunmehr aber noch weiter reduziert ist.

Die erfindungsgemäße Schaltungsanordnung benötigt die Information darüber, welches der beiden Farbdifferenzsignale in einer bestimmten Bildzeile mitübertragen wird. Diese Schaltphasen-Information wird normalerweise in einem der Schaltungsanordnung vorgeschalteten Farbdekoder ohnehin ermittelt und kann in der erfindungsgemäßen Schaltungsanordnung mitverwendet werden. Sollte diese Information nicht vorliegen oder nicht brauchbar sein, beispielsweise, da die Schaltungsanordnung einem Bildspeicher nachgeschaltet ist, aus dem mit anderer Frequenz aus- als eingelesen wird, so kann die Schaltphase der Farbdifferenzsignale auch in der erfindungsgemäßen Schaltungsanordnung ermittelt werden. Dazu ist nach einer weiteren Ausgestaltung vorgesehen, daß Mittel zum Erkennen der Schaltphase der beiden Farbdifferenzsignale vorgesehen sind, welche die Größe der ermittelten Wertedifferenzen auswerten. Nur wenn die richtige Schaltphase vorliegt, sind die ermittelten Wertedifferenzen zumindest zeitweise ungleich Null.

Die Erfindung wird im folgenden anhand der Zeichnung näher erläutert. Es zeigen:

Fig. 1 eine schematische Darstellung einiger korrespondierender Bildpunkte eines Ausschnittes eines sich aus zwei Teilbildern zusammensetzenden Vollbildes eines SECAM-Fernsehsignals mit einer in dem Ausschnitt horizontal verlaufenden Farbkante,

Fig. 2 eine Darstellung gemäß Fig. 1 mit der Bildzeile n als wiederzugebender Bildzeile,

Fig. 3 eine Darstellung gemäß Fig. 1 mit der Bildzeile n + 1 als wiederzugebender Bildzeile,

Fig. 4 ein Blockschaltbild einer Schaltungsanordnung mit zwei Zeilenspeichern zur Durchführung des erfindungsgemäßen Verfahrens und

Fig. 5 eine Tabelle zur Erläuterung der Modi zum Beschreiben bzw. Auslesen der Zeilenspeicher der Schaltungsanordnung gemäß Fig. 4.

Bei der weiteren Erläuterung des erfindungsgemäßen Verfahrens bzw. einer Ausführungsform einer Schaltungsanordnung zur Durchführung des Verfahrens wird davon ausgegangen, daß als zu bearbeitendes Fernsehsignal ein Farbfernsehsignal der SECAM-Norm vorliegt und daß sich jedes Vollbild dieses Signals aus zwei im Zwischenzeilenverfahren geschriebenen Teilbildern zusammensetzt. Wenn im folgenden eine vorige, nachfolgende, etc. Bildzeile erwähnt wird, so ist damit die betreffende Bildzeile desselben Teilbildes gemeint. Ferner wird davon ausgegangen, daß die Vollbild-Vertikal-Frequenz 25 Hz und die Teilbild-Vertikal-Frequenz 50 Hz beträgt.

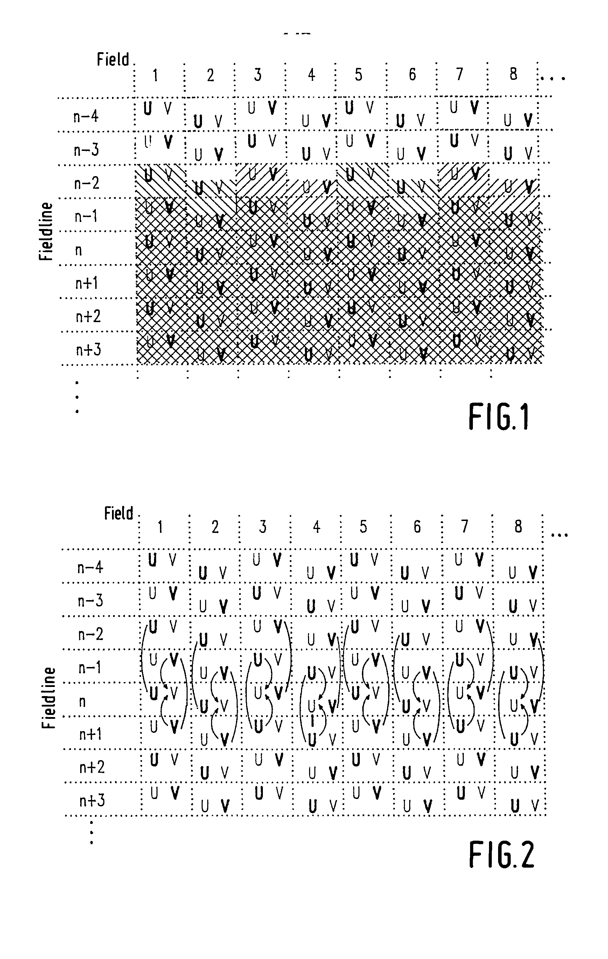

In der schematischen Darstellung gemäß Fig. 1 sind für zeitlich aufeinanderfolgende Teilbilder 1 bis 8 für jeweils dieser Teilbilder jeweils acht Bildpunkte bezüglich ihrer Farbinformation schematisch dargestellt, wobei die acht Bildpunkte jedes Teilbildes in in der Figur angedeuteten Teilbildzeilen n - 4 bis n + 3 angeordnet sind. Es handelt sich jeweils um korrespondierende Bildpunkte dieser Bildzeilen, d.h. also, die acht Bildpunkte sind in den Teilbildzeilen n - 4 bis n + 3 in jeweils gleicher Position innerhalb der betreffenden Bildzeile angeordnet.

Diese acht Bildpunkte sind für die zeitlich aufeinanderfolgenden Teilbilder 1, 2, 3 usw. bis 8 in horizontaler Richtung nebeneinander in der Fig. 1 aufgetragen.

Für die Rückgewinnung der Farbinformation jeden Bildpunktes sind jeweils beide in der SECAM-Norm vorgesehene Farbdifferenzsignale $U_{B-Y}$ und $U_{R-Y}$ erforderlich. Der Einfachheit halber werden diese beiden Farbdifferenzsignale im folgenden nur noch als U und V bezeichnet. Diese Bezeichnung wird im allgemeinen für die normierte, geträgerte Form dieser Farbdifferenzsignale gewählt. Da für jeden übertragenen Bildpunkt nur eines dieser beiden Farbdifferenzsignale mitübertragen wird, muß das jeweils andere Farbdifferenzsignal von einem Bildpunkt einer anderen Bildzeile herangezogen werden, in der das jeweils andere Farbdifferenzsignal mitübertragen wurde. Bei nach dem Stand der Technik üblichen Anordnungen wird dazu im allgemeinen auf das Farbdifferenzsignal des korrespondierenden Bildpunktes der vorigen Bildzeile zurückgegriffen. Bei der Darstellung gemäß Fig. 1 wird zunächst davon ausgegangen, daß die Rückgewinnung der Farbinformation in dieser nach dem Stande der Technik bekannten Weise erfolgt. Ferner wird bei der in Fig. 1 gewählten Darstellung davon ausgegangen, daß zwischen den Teilbildzeilen n - 3 und n - 2 eine Farkante verläuft. Dies bedeutet, daß in der Darstellung gemäß Fig. 1 die in den Teilbildzeilen n - 4 bzw. n - 3 übertragenen Bildpunkte eine andere Farbinformation enthalten als diejenigen der Teilbildzeilen n - 2 bis n + 3.

In der Darstellung gemäß Fig. 1 wurde für die dabei entstehenden verschiedenen Farbdarstellungen die nicht schraffierte Darstellung der Bildpunkte bzw. die doppelt schraffierte Darstellung der Bildpunkte gewählt. Bei idealer Wiedergabe müßten also die in den Zeilen n - 4 und n - 3 dargestellten Bildpunkte sämtlicher Teilbilder in nicht schraffierter Form dargestellt sein, wie dies auch der Fall ist. Es müßten jedoch auch sämtliche Bildpunkte der Teilbildzeilen n - 2 bis n + 3 insbesondere die der Teilbildzeilen n - 2 und n - 1 in doppelt schraffierter Form dargestellt sein, d.h. also in derjenigen Farbe dargestellt werden, die unterhalb der zwischen den Teilbildzeilen n - 3 und n - 2 verlaufenden Farbkante vorliegt.

Wie bereits erwähnt, werden die Bildpunkte sämtlicher Teilbilder in den Teilbildzeilen n - 4 und n - 3 in der richtigen Farbe dargestellt. In den Teilbildzeilen n - 2 treten jedoch aufgrund der zwischen dieser Bildzeile und der vorigen Bildzeile n - 3 liegenden Farbkante Probleme auf. So wird beispielsweise für den in der Fig. 1 dargestellten Bildpunkt des ersten Teilbildes der Teilbildzeile n - 2 das Farbdifferenzsignal U mitübertragen. Dies ist in der Figur durch Fettdruck des Buchstabens U angedeutet. Für diesen Bildpunkt wird jedoch das andere Farbdifferenzsignal V, das zur Rückgewinnung der Farbinformation des Bildpunktes erforderlich ist, nicht mitübertragen. Das Farbdifferenzsignal V wurde zuletzt für den korrespondierenden Bildpunkt dieses Teilbildes in der Teilbildzeile n - 3 übertragen. Nach Verfahren bzw. Anordnungen nach dem Stande der Technik wird für den in Rede stehenden Bildpunkt der Teilbildzeile n - 2 daher das Farbdifferenzsignal V der Teilbildzeile n - 3 herangezogen. Da jedoch zwischen diesen Teilbildzeilen gerade die Farbkante verläuft, weist dieses Farbdifferenzsignal V die falschen Werte auf, bzw. genauer gesagt diejenigen Werte, die der Farbwiedergabe in Zeile n - 3 entsprechen. Das mit der Teilbildzeile n - 2 für den dargestellten Bildpunkt mitübertragene Farbdifferenzsignal U weist jedoch bereits die Farbe der Teilbildzeile n - 2 unterhalb der Farbkante auf. Somit entsteht für den in der Fig. dargestellten Bildpunkt des ersten Teilbildes der Teilbildzeile n - 2 eine falsche Farbwiedergabe. Entsprechendes gilt für den in der Fig. dargestellten Bildpunkt des zweiten Teilbildes in der Teilbildzeile n - 2. Auch für diesen Bildpunkt wird das falsche Farbdifferenzsignal V aus Zeile n - 3 herangezogen.

Für den in der Fig. 1 dargestellten Bildpunkt des dritten Teilbildes der Teilbildzeile n - 2 gilt ähnliches, jedoch in gerade umgekehrter Weise. Für diesen Bildpunkt wurde das Farbdifferenzsignal V mitübertragen, das somit den richtigen Farbwert aufweist. Zur Rückgewinnung der Farbinformation wird jedoch das für diesen Bildpunkt nicht mitübertragene Farbdifferenzsignal U des korrespondierenden Bildpunktes der vorigen Bildzeile n - 3 herangezogen, das den falschen Farbwert hat, nämlich den der Teilbildzeile n - 3 also den der Farbe oberhalb der Farbkante. Für den in der Fig. 1 dargestellten Bildpunkt des Teilbildes 4 der Teilbildzeile n - 2 gilt wiederum entsprechendes wie für denjenigen des dritten Teilbildes dieser Teilbildzeile. Für den in der Fig. 1 weiterhin dargestellten Ausschnitt der Teilbilder 5, 6, 7 und 8 gilt entsprechendes wie für die Ausschnitte der Teilbilder 1, 2, 3 und 4.

Je nach Art der Farben entsteht dadurch, daß eines der beiden Farbdifferenzsignale der beider Teilbilder der Teilbildzeilen n - 2 falsch ist, eine nicht nur falsche Farbsättigung sondern auch eine Darstellung einer falschen Farbe, die unter Umständen weder der an sich übertragenen Farbe der Teilbildzeile n - 3 noch der für die nachfolgenden Teilbildzeilen übertragenen Farbe entspricht. Es entstehen also, wie in der Fig. 1 durch die nur einfach schraffierten Felder angedeutet, Bereiche, in denen eine falsche Farbübertragung erfolgt. Außerdem sind die tatsächlich wiedergegebenen Farbkanten jeweils um eine Teilbildzeile gegeneinander versetzt. So sind in der Darstellung gemäß Fig. 1 erst die Bildpunkte der Teilbildzeile n - 1 mit korrekter Farbwiedergabe wiedergegeben. Da für zwei Teilbilder eines Vollbildes mit einem bestimmten Bildpunkt jeweils das gleiche Farbdifferenzsignal übertragen wird und da die beiden Teilbilder gegeneinander versetzt sind, laufen die Farbkanten über vier Teilbilder von oben nach unten durch das Bild. Aufgrund der Teilbild-Vertikal-Frequenz von 50 Hz ergibt sich hierdurch eine 12,5 Hz Flackerstörung an Farbkanten, die störend wirkt.

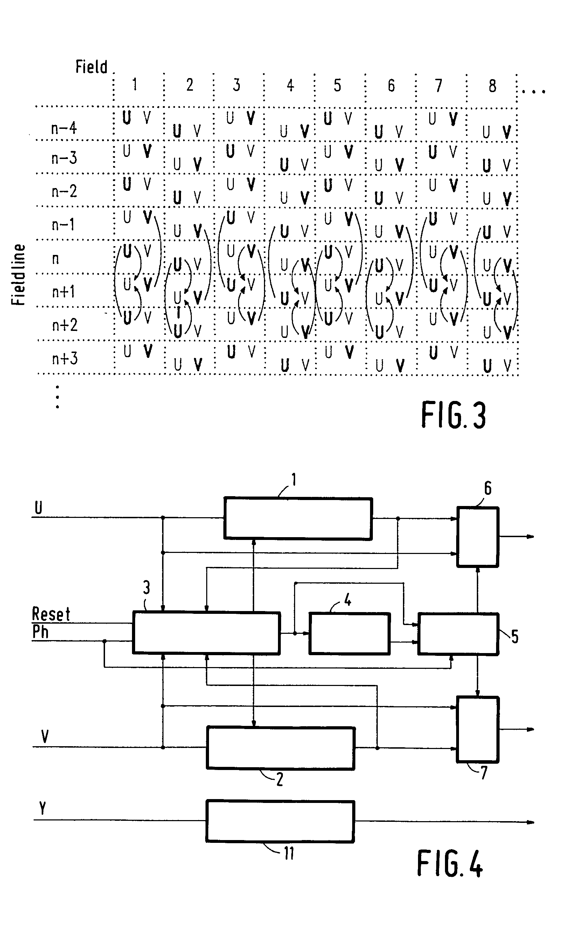

Im folgenden soll das erfindungsgemäße Verfahren zur Reduktion des Flackerns anhand der Fig. 2 und 3 näher erläutert werden, in welchen eine ähnliche Darstellung gewählt wurde wie in Fig. 1, in denen jedoch die angedeuteten verschiedenen Farbbereiche bzw. die Farbkante weggelassen wurden.

In der Darstellung gemäß Fig. 2 wird davon ausgegangen, daß die Teilbildzeile n wiedergegeben wird. Für den in der Fig. 2 dargestellten Bildpunkt des ersten Teilbildes in dieser Teilbildzeile wurde für diesen Bildpunkt nur das Farbdifferenzsignal U mitübertragen. Das Farbdifferenzsignal V muß nun gemäß dem Verfahren ermittelt werden. Dazu wird eine gewichtete Summe der beiden Farbdifferenzsignale der korrespondierenden Bildpunkte der vorigen Teilbildzeile, also der Teilbildzeile n - 1 und der nachfolgenden Teilbildzeile, also der Teilbildzeile n + 1, herangezogen. Dies ist durch die beiden Pfeile angedeutet, welche in der Fig. 2 von den für diese korrespondierenden Bildpunkte mitübertragenen Farbdifferenzsignale V auf das für den wiederzugebenden Bildpunkt des ersten Teilbilds der Teilbildzeile n nicht mitübertragene und daher in der Fig. 2 nur dünn dargestellte V weisen. Die Gewichtung dieser beiden Farbdifferenzsignale innerhalb der Summe wird in Abhängigkeit zweier Wertedifferenzen vorgenommen. Die erste Wertedifferenz wird zwischen dem Farbdifferenzsignal des wiederzugebenden Bildpunktes der Teilbildzeile n und desjenigen Farbdifferenzsignals des korrespondierenden Bildpunktes der vorvorigen Teilbildzeile, also der Teilbildzeile n - 2, gewonnen. Die zweite Wertedifferenz wird gebildet zwischen den Farbdifferenzsignalen der mit dem wiederzugebenden Bildpunkt korrespondierenden Bildpunkte der vorigen (n - 1) und der nachfolgenden (n + 1) Teilbildzeile. In Abhängigkeit dieser beiden Wertedifferenzen wird nun das für den in der Fig. 2 dargestellten Bildpunkt des ersten Teilbildes der Teilbildzeile n nicht mitübertragene Farbdifferenzsignal durch gewichtete Summierung der beiden Farbdifferenzsignale der korrespondierenden Bildpunkte der Teilbildzeilen n - 1 und n + 1 gewonnen. Vorzugsweise wird die Gewichtung dabei in der Weise vorgenommen, daß bei relativ großen Werten der beiden Wertedifferenzen das Farbdifferenzsignal des korrespondierenden Bildpunktes der nachfolgenden Teilbildzeile, also der Teilbildzeile n + 1, in der Summe überwiegt bzw. daß bei relativ kleinen Werten der beiden Wertedifferenzen das Farbdifferenzsignal des korrespondierenden Bildpunktes der vorigen Teilbildzeile, also der Teilbildzeile n - 1, überwiegt. Sollte nämlich zwischen den Teilbildzeilen n und n - 1 eine Farbkante verlaufen, so würden beide Wertedifferenzen relativ große Werte annehmen. In diesem Falle wird zur Gewinnung des nicht mitübertragenen Farbdifferenzsignals vor allem das der nachfolgenden Bildzeile herangezogen, dieses überwiegt also in der Summenbildung. Damit wird vermieden, daß das falsche Farbdifferenzsignal des korrespondierenden Bildpunktes der Bildzeile n - 1, der oberhalb der Farbkante liegt, herangezogen wird. Weisen die beiden Wertedifferenzen relativ kleine Werte auf, so ist die Farbwiedergabe für die in der Fig. dargestellten Bildpunkte der Teilbildzeilen n und n - 1 nahezu gleich, so daß das fehlende Farbdifferenzsignal überwiegend oder ausschließlich von dem korrespondierenden Bildpunkte der vorigen Bildzeile übernommen werden kann.

Die Gewichtung der beiden Farbdifferenzsignale kann, wie oben erläutert, durch hartes Umschalten zwischen den Farbdifferenzsignalen und der nachfolgenden bzw. der vorigen Bildzeile vorgenommen werden, wie auch durch fließende Veränderung der relativen Gewichtung der beiden Farbdifferenzsignale innerhalb der Summe beispielsweise anhand einer Kennlinie.

Unahbängig davon, welches der beiden Farbdifferenzsignale U oder V für den wiederzugebenden Bildpunkt mitübertragen wurde, arbeitet das Verfahren in gleicher Weise. So werden beispielsweise für den in der Fig. 2 dargestellten Bildpunkt des dritten Bildpunktes der Teilbildzeile n die oben beschriebenen Wertedifferenzen in gleicher Weise gebildet. Da für diesen Bildpunkt jedoch das andere Farbdiffererenzsignal V mitübertragen wurde, wie dies in der Fig. 2 durch Fettdruck des Buchstabens V angedeutet ist, wird für diesen Bildpunkt die erste Wertedifferenz zwischen dem mit den Bildpunkten mitübertragenen Farbdifferenzsignalen V und dem entsprechenden Farbdifferenzsignal des korrespondierenden Bildpunktes der vorvorigen Teilbildzeile, also der Teilbildzeile n - 2, gewonnen. Das für diesen Bildpunkt nicht mitübertragene Farbdifferenzsignal U wird dann durch gewichtete Aufsummierung der für die korrespondierenden Bildpunkte der Teilbildzeilen n - 1 und n + 1 mitübertragenen Farbdifferenzsignale gebildet.

In der Darstellung gemäß Fig. 3, welche grundsätzlich genauso aufgebaut ist wie die Darstellung der Fig. 2, wird im Gegensatz zu dieser jedoch davon ausgegangen, daß die Bildpunkte der Teilbildzeile n + 1 wiedergegeben werden. Mit anderen Worten befindet sich die Bilddarstellung in der darauffolgenden Teilbildzeile n + 1. Es werden hier in gleicher Weise die oben beschriebenen Wertedifferenzen bzw. die gewichtete Summierung vorgenommen. Die Darstellung gemäß Fig. 3 zeigt jedoch, insbesondere im Vergleich zu derjenigen der Fig. 2, daß die beispielsweise für den wiederzugebenden Bildpunkt des ersten Teilbildes der Teilbildzeile n + 1 zu bildende erste Wertedifferenz zwischen dem mit diesem Bildpunkt mitübertragene Farbdifferenzsignal V und dem entsprechenden Farbdifferenzsignal der vorvorigen Teilbildzeile n - 1 identisch ist mit der zweiten Wertedifferenz, welche für den korrespondierenden Bildpunkt der vorigen Zeile, also für den Bildpunkt der Teilbildzeile n gemäß Fig. 2 ermittelt wurde. Diese für den in der Fig. 3 dargestellten Bildpunkt des ersten Teilbildes der Teilbildzeile n + 1 benötigte erste Wertedifferenz muß also nicht für diesen Bildpunkt neu bestimmt werden, sondern es kann die für den korrespondierenden Bildpunkt der vorigen Teilbildzeile n ermittelte erste Wertedifferenz als zweite Wertedifferenz des korrespondierenden Bildpunktes der Teilbildzeile n + 1 herangezogen werden. Dies gilt in entsprechender Weise für alle Bildpunkte, so daß z.B. auch die oben erwähnte für den gemäß Fig. 2 darzustellenden Bildpunkt des dritten Teilbildes der Teilbildzeile n gebildete zweite Wertedifferenz für den gemäß Fig. 3 darzustellenden Bildpunkt des dritten Teilbildes der Teilbildzeile n + 1 als dessen erste Wertedifferenz herangezogen werden kann.

Obwohl also für die Bestimmung der Gewichtung der beiden Farbdifferenzsignale in der Summe für jeden Bildpunkt zwei Wertedifferenzen erforderlich sind, muß für jeden Bildpunkt nur eine dieser Wertedifferenzen neu berechnet werden, da die andere Wertedifferenz jeweils von dem korrespondierenden Bildpunkt der vorigen Teilbildzeile übernommen werden kann.

In Fig. 4 ist ein Blockschaltbild einer Schaltungsanordnung dargestellt, welche zwei Bildzeilenspeicher aufweist und zur Durchführung des erfindungsgemäßen Verfahrens eingesetzt werden kann. Bei der Erläuterung dieser Schaltungsanordnung soll zunächst davon ausgegangen werden, daß zur Rückgewinnung der Farbinformation eines wiederzugebenden Bildpunktes neben dem mit diesem Bildpunkt gemeinsam mitübertragenen Farbdifferenzsignal die gewichtete Summe der beiden Farbdifferenzsignale der korrespondierenden Bildpunkte der vorigen und der nachfolgenden Bildzeile in der Weise gewonnen wird, daß je nach Größe der beiden ermittelten Wertedifferenzen alternativ die Summe sich entweder ausschließlich aus dem Farbdifferenzsignal des korrespondierenden Bildpunktes der vorigen oder dem der nachfolgenden Bildzeile zusammensetzt. Es wird also zunächst einmal davon ausgegangen, daß eine harte Umschaltung zwischen diesen beiden Farbdifferenzsignalen in Abhängigkeit der beiden Wertedifferenzen vorgenommen wird. Es ist in diesem Falle nur ein Schwellwert erforderlich, bei dessen Über- bzw. Unterschreiten auf den einen bzw. anderen Farbdifferenzsignalwert der korrespondierenden Bildpunkte umgeschaltet wird. Im nachfolgenden wird dann, ebenfalls anhand des Blockschaltbildes gemäß der Fig. 4, eine zweite Ausführungsform näher erläutert, bei der die Gewichtung der beiden Farbdifferenzsignale innerhalb der Summe in Abhängigkeit der Werte der beiden Wertedifferenzen anhand einer Kennlinie vorgenommen wird.

In Fig. 4 ist in dem Blockschaltbild ein erster Zeilenspeicher 1 dargestellt, welchem eingangsseitig das Farbdifferenzsignal U zugeführt wird, sofern dies in einer Bildzeile bzw. Teilbildzeile mitübertragen wird. Es ist ferner ein zweiter Zeilenspeicher 2 vorgesehen, welchem das andere Farbdifferenzsignal V zugeführt wird. Beide Zeilenspeicher 1 und 2 sind so ausgelegt, daß sie sämtliche Farbdifferenzsignalwerte des ihnen zugeordneten Farbdifferenzsignals U bzw. V einer Bildzeile bzw. Teilbildzeile abspeichern können.

In der Schaltungsanordnung gemäß Fig. 4 ist ferner eine Recheneinheit 3 zur Bestimmung der Wertedifferenzen und eine Kantensignals vorgesehen. Der Recheneinheit 3 ist dabei sowohl das gegebenenfalls mitübertragene Farbdifferenzsignal U wie auch das Ausgangssignal des ersten Zeilenspeichers, welcher das verzögerte Farbdifferenzsignal U liefert, zugeführt. Entsprechendes gilt für das mitübertragene bzw. verzögerte Farbdifferenzsignal V. In der Recheneinheit 3 wird für jeden wiederzugebenden Bildpunkt dessen zweite Wertedifferenz neu gebildet. Diese Wertedifferenz wird mit einem Schwellwert, welcher von außen in in der Fig. 4 nicht näher dargestellter Weise vorgegeben werden kann, verglichen. Dieses Vergleichsergebnis, das also für jeden Bildpunkt nur noch eine Ja/Nein-Information darstellt, wird als Kantensignal in Zuordnung zu jedem einzelnen Bildpunkt in einem Kantensignalspeicher 4, der der Recheneinheit 3 nachgeschaltet ist, abgespeichert. In diesem Kantensignalspeicher 4 werden sämtliche Kantensignale der Bildpunkte einer Bildzeile abgespeichert.

In der Schaltungsanordnung gemäß Fig. 4 ist ferner eine Bildwiedergabe-Steuerung 5 vorgesehen, welcher eingangsseitig sowohl das von der Recheneinheit 3 aktuell erzeugte Kantensignal, wie auch das in dem Kantensignalspeicher um die Dauer einer Bildzeile verzögerte Kantensignal zugeführt werden. Die Bildwiedergabe-Steuerung ihrerseits steuert einen ersten Multiplexer 6 sowie einen zweiten Multiplexer 7.

Dem ersten Multiplexer 6 ist sowohl das in dem ersten Zeilenspeicher verzögerte Farbdifferenzsignal U sowie auch das gegebenenfalls aktuell übertragene Farbdifferenzsignal U zugeführt. Entsprechendes gilt für das verzögerte bzw. original mitübertragene Farbdifferenzsignal V bezüglich des zweiten Multiplexers 7. Die Bildwiedergabesteuerung 5 steuert die beiden Multiplexer 6 und 7 in Abhängigkeit der ermittelten Kantensignale.

Sowohl der Recheneinheit 3 wie auch der Bildwiedergabesteuerung 5 ist ein in der Fig. 4 mit Ph bezeichnetes Signal zugeführt, welches die Schaltphase der beiden Farbdifferenzsignale angibt, d.h. also welches signalisiert, welches der beiden Farbdifferenzsignale in einer aktuell übertragenen Zeile mitübertragen wird. Der Recheneinheit 3 ist ferner ein Reset-Signal zugeführt, welches zum Zurücksetzen der Recheneinheit 3 und/oder der beiden Zeilenspeicher 1 und 2 dient.

Da, wie im folgenden noch näher zu erläutern sein wird, die Farbinformationen der Bildpunkte jeder Bildzeile um die Dauer einer Bildzeile verzögert wiedergegeben werden, ist es vorteilhaft, auch das Helligkeitssignal jeden Bildpunktes um die Dauer einer Bildzeile zu verzögern. Dazu ist in der Darstellung gemäß Fig. 4 ein dritter Zeilenspeicher 11 vorgesehen, welchem das Leuchtdichtesignal Y zugeführt wird, das in dem Zeilenspeicher 11 um die Dauer einer Bildzeile verzögert wird.

Im folgenden wird die Schaltungsanordnung gemäß Fig. 4 insbesondere im Hinblick auf die Steuerung der beiden Zeilenspeicher 1 und 2, der Gewinnung des Kantensignals und der Steuerung der Multiplexer 6 und 7 näher erläutert.

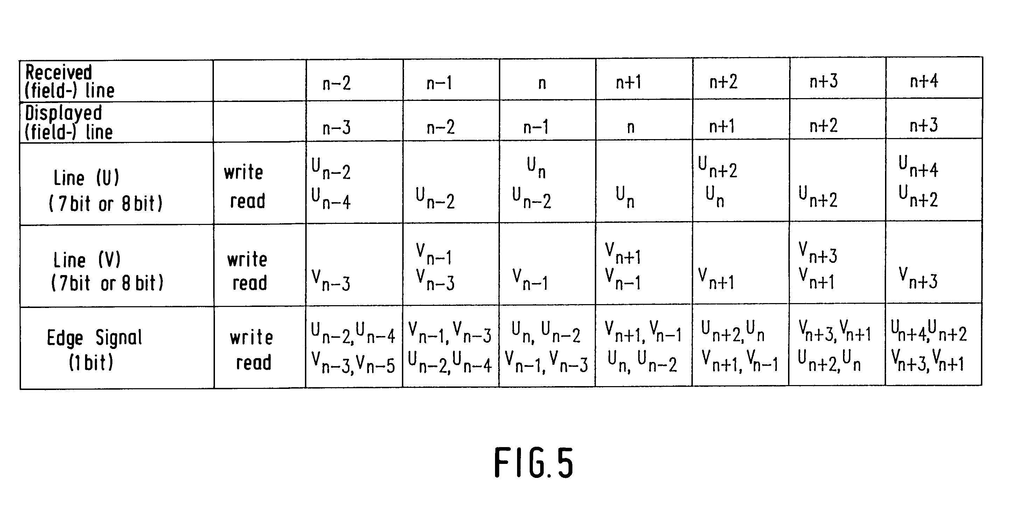

In der Tabelle gemäß Fig. 5 sind in deren erster Zeile empfangene Bildzeilen n - 2 bis n + 4 eingetragen. In der zweiten Tabellen-Zeile ist die jeweils wiedergegebene (Teil-)Bildzeile eingetragen. Schon hieraus ergibt sich, daß die empfangene Zeile um die Dauer einer Bildzeile verzögert dargestellt bzw. wiedergegeben wird. Dies gilt bildpunktgenau, d.h. also ein bestimmter Bildpunkt einer Bildzeile n wird genau zu dem Zeitpunkt wiedergegeben, zu dem der korrespondierende Bildpunkt der nachfolgenden Zeile n + 1 empfangen wird.

In den Zeilen 3 und 4 der Tabelle gemäß Fig. 5 ist der Schreib- bzw. Lesezyklus der beiden Zeilenspeicher 1 und 2 eingetragen.

In der fünften Zeile der Tabelle ist das Kantensignal eingetragen, das jeweils aktuell berechnet und in den Kantensignalspeicher 4 eingelesen wird, so wie dasjenige Kantensignal, das aus dem Kantensignalspeicher 4 ausgelesen wird.

Die beiden Zeilenspeicher 1 und 2 gemäß Fig. 4 sind so gesteuert, daß die in sie jeweils eingelesenen zugeordneten Farbdifferenzsignale um die Dauer genau zweier Bildzeilen verzögert wieder ausgelesen werden. Wird also ein bestimmter Bildpunkt einer Bildzeile n in einen der Zeilenspeicher eingelesen, so wird zeitgleich der korrespondierende Bildpunkt der vorvorigen Bildzeile aus diesen Zeilenspeicher ausgelesen. Für den Kantensignalspeicher 4 gilt entsprechendes, jedoch wird hier nur eine Verzögerung um die Dauer einer Bildzeile vorgenommen.

Die Verzögerungen der beiden Zeilenspeicher 1 und 2 der Anordnung gemäß Fig. 4 um zwei Bildzeilen wurde gewählt, da das Farbdifferenzsignal einer Art nur in jeweils jeder zweiten Bildzeile bzw. Teilbildzeile übertragen wird.

Wie die beiden Zeilen 3 und 4 der Tabelle gemäß Fig. 5 zeigen, wird ein mitübertragenes Farbdifferenzsignal in den jeweils zugeordneten Zeilenspeicher 1 oder 2 der Anordnung gemäß Fig. 4 neu eingelesen. Gleichzeitig mit diesem Einlesevorgang kann, wie oben bereits erwähnt, das in diesen Speicher eingelesene Farbdifferenzsignal der vorvorigen Zeile des jeweils korrespondierenden Bildpunktes ausgelesen werden.

Die in den Zeilenspeichern 1 und 2 abgespeicherten Farbdifferenzsignale werden sowohl für die Bildwiedergabe selbst, wie auch für die Berechnung der beiden Wertedifferenzen herangezogen.

Wie oben bereits erläutert wurde, werden für jeden Bildpunkt sowohl die erste wie auch die zweite Wertedifferenz benötigt. Von diesen Wertedifferenzen muß jedoch nur jeweils die zweite aktuell berechnet werden, da die erste Wertedifferenz von dem korrespondierenden Bildpunkt der vorigen Bildzeile herangezogen werden kann, da sie identisch mit dessen zweiter Wertedifferenz ist. Es muß also für jeden Bildpunkt einer Bildzeile nur jeweils eine Wertedifferenz neu berechnet bzw. mit dem Schwellwert verglichen werden.

In der fünften Zeile der Fig. 5 ist angedeutet, daß während der Darstellung einer Bildzeile jeweils ein Kantensignal neu berechnet und in den Kantensignalspeicher 4 eingeschrieben und gleichzeitig das zuvor in den Kantensignalspeicher 4 abgespeicherte Kantensignal ausgelesen wird.

Im folgenden werden die während der Wiedergabe der Bildzeile n und n + 1 ablaufenden Vorgänge erläutert. Es wird dabei auf die Schaltungsanordnung Fig. 4 und die Tabelle gemäß Fig. 5 bezug genommen.

Für jeden Bildpunkt der wiederzugebenden Bildzeile n wird das zugehörige, gemeinsam mit dieser Bildzeile zuvor übertragene Farbdifferenzsignal $U_n$ aus dem diesem zugeordneten Zeilenspeicher 1 ausgelesen und steht am Ausgang des ersten Multiplexers 6 zur Verfügung. Gleichzeitig wird jedoch bereits die Bildzeile n + 1 empfangen, so daß zu jedem wiedergebenen Bildpunkt der Bildzeile n gleichzeitig das Farbdifferenzsignal V n + 1 des jeweils korrespondierenden Bildpunktes der Bildzeile n + 1 vorliegt. Außerdem liegt auch das Farbdifferenzsignal des jeweils korrespondierenden Bildpunktes der Bildzeile n - 1 vor, das aus dem zweiten Bildspeicher 2 ausgelesen wird, in den es eine Zeile zuvor eingelesen worden war.

Diese beiden Farbdifferenzsignale der zu dem jeweils wiedergegebenen Bildpunkt korrespondierenden Bildpunkte der vorigen und der nachfolgenden Bildzeile stehen der Recheneinheit 3 zur Verfügung und sind auch dem zweiten Multiplexer 7 zugeführt. Zur Bestimmung der Gewichtung dieser beiden Farbdifferenzsignale in der Summe werden während der Wiedergabe der Bildpunkte der Bildzeile n die zweiten Wertedifferenzen dieser Bildpunkte neu gebildet. Es handelt sich dabei um die Wertedifferenzen zwischen den Farbsignalen V n + 1 der nachfolgenden und V n - 1 der vorigen Bildzeile. Die Berechnung dieser Wertedifferenzen wird mittels der Recheneinheit 3 vorgenommen. In der Recheneinheit 3 werden diese Werte der zweiten Wertedifferenz mit dem Schwellwert verglichen und stehen als Kantensignal einzeln für jeden wiederzugebenden Bildpunkt zur Verfügung. Die für jeden wiederzugebenden Bildpunkt außerdem benötigte erste Wertedifferenz ist identisch mit den zweiten Wertedifferenzen der korrespondierenden Bildpunkte der vorigen Bildzeile. Dieses während der vorigen Bildzeile n - 1 bereits im Kantensignalspeicher 4 abgespeicherte und in entsprechender Weise erzeugte Kantensignal steht ebenso wie das aktuell erzeugte Kantensignal der Bildwiedergabesteuerung 5 zur Verfügung. Die Bildwiedergabesteuerung 5 kann anhand dieser beiden Kantensignale den Multiplexer 7 so schalten, daß entweder das Farbdifferenzsignal des korrespondierenden Bildpunktes der vorigen oder das der nachfolgenden Bildzeile am Ausgang des Multiplexers 7 erscheint. Für jeden wiederzugebenden Bildpunkt der Bildzeile n liefert also der erste Multiplexer 6 das gemeinsam mit dem Bildpunkt übertragene Farbdifferenzsignal $U_n$. Gleichzeitig liefert der zweite Multiplexer 7 an seinem Ausgang das Farbdifferenzsignal des korrespondierenden Bildpunktes der vorigen oder der nachfolgenden Bildzeile.

Während der Darstellung der Bildzeile n + 1 wird das gemeinsam mit dieser Bildzeile übertragene und zuvor in den zweiten Zeilenspeicher 2 eingelesene Farbdifferenzsignal $V_{n+1}$ für jeden Bildpunkt ausgelesen und steht am Ausgang des zweiten Multiplexers 7 zur Verfügung. Das während der Darstellung der Bildzeile n + 1 bereits empfangene Signal der Bildzeile n + 2, in der das andere Farbdifferenzsignal U übertragen wird, steht an einem Eingang des ersten Multiplexers 6 zur Verfügung. Am anderen Eingang dieses Multiplexers steht das aus dem ersten Zeilenspeicher 1 ausgelesene Farbdifferenzsignal $U_n$ der vorvorigen Zeile zur Verfügung. Für die vorige Bildzeile n wurde bereits ein Vergleich dessen zweiter Wertedifferenz mit dem Schwellwertsignal vorgenommen und als Kantensignal dann im Kantensignalspeicher 4 abgespeichert. Für die nun wiederzugebende Bildzeile n + 1 kann dieses aus dem Kantensignalspeicher 4 wieder ausgelesen und kann nun für die Bildpunkte dieser Zeile als Vergleichsergebnis deren ersten Wertedifferenzen mit dem Schwellwert dienen. Für die Bildzeile n + 1 sind also nur noch die zweiten Wertedifferenzen neu zu berechnen und mit dem Schwellwert zu vergleichen. Dazu werden die Farbdifferenzsignale der während der Darstellung der Zeile n + 1 bereits empfangenen Zeile n + 2 der jeweils korrespondierenden Bildpunkte herangezogen. Gleichzeitig werden die Farbdifferenzsignale $U_n$ der jeweils korrespondierenden Bildpunkte der Bildzeile n aus dem ersten Zeilenspeicher ausgelesen. Aus diesen Farbdifferenzsignalen der korrespondierenden Bildpunkte der vorigen und der nachfolgenden Bildzeile wird die zweite Wertedifferenz der wiedergegebenden Bildzeile n + 1 ermittelt. Auch diese Wertedifferenzen werden für jeden Bildpunkt wiederum mit dem Schwellwertsignal verglichen und sowohl der Bildwiedergabesteuerung 5 zur Verfügung gestellt, wie auch in den Kantensignalspeicher 4 eingelesen.

Während der Wiedergabe jedes Bildpunktes der Bildzeile n + 1 steht also der Bildwiedergabesteuerung 5 für jeden wiederzugebenden Bildpunkt sowohl das Vergleichsergebnis dessen zweiter Wertedifferenz mit dem Schwellwertsignal wie auch das zuvor abgespeicherte und nun aus dem Kantensignalspeicher 4 ausgelesene Vergleichsergebnis dessen erster Wertedifferenz, das für den korrespondierenden Bildpunkt der vorigen Bildzeile dessen zweite Wertedifferenz war, zur Verfügung. Anhand dieser beiden Kantensignale schaltet nun die Bildwiedergabesteuerung 5 den ersten Multiplexer 6 entweder auf das Farbdifferenzsiganl U n + 1, also das der zu der wiedergebenene Bildzeile vorigen Bildzeile, oder das Farbdifferenzsignal $U_n$, also dasjenige Farbdifferenzsignal der der wiedergebenden Bildzeile nachfolgenden Bildzeile.

Diese Vorgänge wiederholen sich zeilenweise, wobei die beiden Zeilenspeicher 1 und 2 abwechselnd mit dem ihnen jeweils zugeordneten aktuell übertragenen Farbdifferenzsignal beschrieben werden. In dieser ersten Ausführungsform der Schaltungsanordnung wird für jeden wiederzugebenden Bildpunkt zur Rückgewinnung der Farbinformation das in seiner Zeile für ihn mitübertragene Farbdifferenzsignal und entweder das Farbdifferenzsignal des korrespondierenden Bildpunktes der vorigen oder der nachfolgenden Bildzeile herangezogen, wobei die Entscheidung vorgenommen wird anhand eines Vergleichsergebnisses der Werte der beiden Wertedifferenzen. Noch bessere Ergebnisse werden erzielt, wenn anstelle einer harten Umschaltung eine weiche Umsteuerung vorgenommen wird. Das jeweils mit einem wiederzugebenden Bildpunkt nicht mitübertragene Farbdifferenzsignal wird aus einer gewichteten Summe der beiden Farbdifferenzsignale der korrespondierenden Bildpunkte der vorigen und der nachfolgenden Bildzeile gewonnen. Die relative Gewichtung der beiden Farbdifferenzsignale innerhalb der Summe wird in Abhängigkeit der Werte der beiden Wertedifferenzen anhand einer Kennlinie vorgenommen.

Die Schaltungsanordnung gemäß Fig. 4 ist für diese Ausführungsform dahingehend zu erweitern, daß in dem Kantensignalspeicher 4 nicht nur das Vergleichsergebnis der Wertedifferenz jedes Bildpunktes mit dem Schwellwert abgespeichert wird, sondern die Wertedifferenz selbst. Der Bildwiedergabesteuerung 5 stehen dann für jeden wiederzugebenden Bildpunkt sowohl die aktuell ermittelte zweite Wertedifferenz dieses Bildpunktes wie auch die erste Wertedifferenz dieses Bildpunktes zur Verfügung, welche für den korrespondierenden Bildpunkt der vorigen Bildzeile bereits als dessen zweite Wertedifferenz ermittelt wurde. In der Bildwiedergabesteuerung 5 wird dann anhand einer zuvor vorgegebenen Kennlinie ein Vergleich dieser beiden Wertedifferenzen mit den Kennlinienwerten vorgenommen. Die Kennlinie liefert dann das richtige Gewichtungsverhältnis der Farbdifferenzsignale der vorigen und der nachfolgenden Bildzeile innerhalb deren Summe. Diese Summenbildung kann, gesteuert durch die Bildwiedergabe-Steuerung 5, beispielsweise in der Weise vorgenommen werden, daß anstelle der Multiplexer 6 und 7 der Anordnung gemäß Fig. 4 je zwei Multiplizierer und ein Addierer vorgesehen sind. Mittels der Multiplizierer wird dann jeweils sowohl das aus dem zugeordneten Zeilenspeicher ausgelesene Farbdifferenzsignal, wie auch das aktuell übertragene Farbdifferenzsignal gleichen Typs mit einem Wert zwischen 0 und 1 multipliziert und in einem nachgeschalteten Addierer werden die beiden Werte addiert. Auf diese Weise kann in Abhängigkeit der Kennlinie eine beliebige Gewichtung zwischen den Farbdifferenzsignalen innerhalb der Summe vorgenommen werden. Auch in diesem Falle gilt, daß das jeweils mitübertragene Farbdifferenzsignal unverändert für den wiederzugebenden Bildpunkt übernommen wird und daß das nicht mitübertragene Farbdifferenzsignal durch eben die gewichtete Summe der beiden anderen Farbdifferenzsignale der korrespondierenden Bildpunkte der vorigen und der nachfolgenden Bildzeile herangezogen wird. Diese zweite Ausführungsform gestattet eine noch feinere Nachsteuerung und kann insbesondere dann Vorteile haben, wenn das Farbfernsehsignal mit Rauschen überlagert ist, da in ungünstigen Fällen das Rauschen dazu führen kann, daß die beiden Wertedifferenzen den vorgegebenen Schwellwert bedingt durch das Rauschen stochastisch über- oder unterschreiten. Dieses kann durch Entscheidung anhand einer Kennlinie vermieden werden.

Sowohl bezüglich der Berechnung der für einen wiederzugebenden Bildpunkt nicht mitübertragenen Farbinformation, für die die Farbdifferenzsignale der korrespondierenden Bildpunkte der vorigen und der nachfolgenden Bildzeile herangezogen werden, wie auch bezüglich der Berechnung der beiden Wertedifferenzen wird immer von den betreffenden Bildzeilen desselben Bildes ausgegangen. Handelt es sich also um eine Übertragungsnorm, bei der ein Vollbild nacheinander in zwei Teilbildern übertragen wird, so beziehen sich die oben genannten Angaben auf Bildzeilen innerhalb desselben Teilbildes, also z.B. auf die vorige bzw. nachfolgende Teilbildzeile.

Bei der in der Fig. 4 dargestellten Schaltungsanordnung, welche anhand der Tabelle gemäß Fig. 5 näher erläutert wurde, kann es sich sowohl um eine digital wie auch um eine analog aufgebaute Schaltungsanordnung handeln. In entsprechender Weise handelt es sich dann insbesondere bei den Farbdifferenzsignalen U und V bzw. dem Helligkeitssignal Y um ein analoges bzw. digitales Signal. Ist die Schaltungsanordnung digital aufgebaut, so können beispielsweise, wie in der ersten Spalte der Tabelle gemäß Fig. 5 angedeutet, die beiden Farbdifferenzsignale in den Zeilenspeichern 1 bzw. 2 der Schaltungsanordnung gemäß Fig. 4 mit einer Wortbreite von jeweils sieben oder acht Bit abgespeichert werden. Das Kantensignal kann in dem Falle, daß eine harte Umschaltung zwischen den beiden Farbdifferenzsignalen der vorigen bzw. der nachfolgenden Bildzeile vorgenommen wird, in nur einem Bit pro Bildpunkt abgespeichert werden, da es um eine reine Ja/Nein-Entscheidung handelt, nämlich die, ob die betreffende Wertedifferenz das Schwellwertsignal überschreitet oder nicht.

Die Schaltungsanordnung gemäß Fig. 4 kann auch in analoger Technik aufgebaut werden, da heute auch die erforderlichen analogen Zeilenspeicher (beispielsweise in CCD-Technik oder Technik geschalteter Kondensatoren) verfügbar sind.

**Patentansprüche**

1. Verfahren zur Reduktion des Farbkantenflakkerns für Bildwiedergabe eines Farbfernsehsignals, in dem Farbinformationen in zwei verschiedenen Farbdifferenzsignalen kodiert übertragen werden, welche einzeln und von Zeile zu Zeile alternierend übertragen werden, dadurch gekennzeichnet, daß in jeder Bildzeile für jeden wiederzugebenden Bildpunkt zur Rückgewinnung der Farbinformation dieses Bildpunktes das in seiner Zeile für ihn mitübertragene Farbdifferenzsignal und eine gewichtete Summe der beiden anderen Farbdifferenzsignale der korrespondierenden Bildpunkte der vorigen und der nachfolgenden Bildzeile herangezogen wird, wobei die relative Gewichtung der beiden Farbdifferenzsignale innerhalb der Summe in Abhängigkeit der Werte zweier Wertedifferenzen vorgenommen wird, von denen eine erste Wertedifferenz zwischen dem Farbdifferenzsignal des wiederzugebenden Bildpunktes und desjenigen des korrespondierenden Bildpunktes der vorvorigen Zeile und eine zweite Wertedifferenz zwischen den Farbdifferenzsignalen der mit dem wiederzugebenden Bildpunkt korrespondierenden Bildpunkte der vorigen und der nachfolgenden Bildzeile gebildet wird.

2. Verfahren nach Anspruch 1, in welchem ein Vollbild aus zwei nacheinander übertragenen und im Zwischenzeilenverfahren dargestellten Teilbildern aufgebaut ist, innerhalb welcher die beiden Farbdifferenzsignale zeilenalternierend übertragen werden, dadurch gekennzeichnet, daß es sich bei den korrespondierenden Bildpunkten der vorigen, der nachfolgenden bzw. der vorvorigen Bildzeile um diejenigen der betreffenden (Teil-)Bildzeilen desselben Teilbildes handelt, in dem sich die (Teil-)Bildzeile des wiederzugebenden Bildpunktes befindet.

3. Verfahren nach Anspruch 1 oder 2, dadurch gekennzeichnet, daß die relative Gewichtung der beiden Farbdifferenzsignale innerhalb der Summe in der Weise vorgenommen wird, daß bei relativ großen Werten der beiden Wertedifferenzen das Farbdifferenzsignal des korrespondierenden Bildpunktes der nachfolgenden Bildzeile in der Summe überwiegt und daß bei relativ kleinen Werten der beiden Wertedifferenzen das Farbdifferenzsignal des korrespondierenden Bildpunktes der vorigen Bildzeile überwiegt.

4. Verfahren nach Anspruch 3, dadurch gekennzeichnet, daß die Summe ausschließlich aus dem Farbdifferenzsignal des korrespondierenden Bildpunktes der nachfolgenden Bildzeile gebildet wird, wenn beide Wertedifferenzen einen vorgebbaren ersten Schwellwert überschreiten.

5. Verfahren nach Anspruch 3 oder 4, dadurch gekennzeichnet, daß die Summe ausschließlich aus dem Farbdifferenzsignal des korrespondierenden Bildpunktes der vorigen Bildzeile gewonnen wird, wenn beide Wertedifferenzen einen vorgebbaren zweiten Schwellwert unterschreiten.

6. Verfahren nach Anspruch 4 und 5, dadurch gekennzeichnet, daß der erste und der zweite Schwellwert identische Werte aufweisen.

7. Verfahren nach einem der Ansprüche 4 bis 6, dadurch gekennzeichnet, daß das für jeden Bildpunkt einer Bildzeile ermittelte Vergleichsergebnis zwischen der zweiten Wertedifferenz und dem oder den Schwellwerten als Kantensignal abgespeichert und in der nachfolgenden Bildzeile für den jeweils korrespondierenden Bildpunkt als Vergleichsergebnis dessen erster Wertedifferenz mit dem oder den Schwellwerten dient.

8. Verfahren nach einem der Ansprüche 1 bis 5, dadurch gekennzeichnet, daß die relative Gewichtung der beiden Farbdifferenzsignale innerhalb der Summe gemäß einer Kennlinie vorgenommen wird, welche in Abhängigkeit der Werte der Wertedifferenzen verschiedene Gewichtungen der beiden Farbdifferenzsignale innerhalb der Summe vorgibt.

9. Verfahren nach Anspruch 8, dadurch gekennzeichnet, daß die für jeden Bildpunkt einer Bildzeile ermittelte zweite Wertedifferenz abgespeichert und für den jeweils korrespondierenden Bildpunkt der nachfolgenden Bildzeile als dessen erste Wertedifferenz dient.

10. Schaltungsanordnung zur Durchführung des Verfahrens nach einem der Ansprüche 1 bis 9, dadurch gekennzeichnet, daß jedem der beiden Farbdifferenzsignale je ein Zeilenspeicher (1, 2) zugeordnet ist, in dem das jeweils zugeordnete Farbdifferenzsignal für alle Bildpunkte einer Bildzeile immer dann neu eingeschrieben wird, wenn eine neue Bildzeile mit dem jeweils zugeordneten Farbdifferenzsignal übertragen wird, und daß Mittel (3) zum Berechnen der Wertedifferenzen vorgesehen sind, zu deren Ermittlung die in den Zeilenspeichern (1, 2) abgespeicherten Werte der Farbdifferenzsignale herangezogen werden.

11. Schaltungsanordnung nach Anspruch 10 zur Durchführung des Verfahrens nach Anspruch 6 und 7, dadurch gekennzeichnet, daß die in den beiden Zeilenspeichern (1, 2) abgespeicherten Werte der Farbdifferenzsignale zwecks Bildwiedergabe zeitlich verzögert ausgelesen werden, so daß eine in einer Bildzeile übertragene Farbinformation mit einer zeitlichen Verzögerung der Dauer einer Bildzeile wiedergegeben wird, daß Mittel (3) vorgesehen sind, welche für jeden Bildpunkt der dargestellten Bildzeile die Berechnung der zweiten Wertedifferenz vornehmen, diese mit dem Schwellwert vergleichen und das so ermittelte Kantensignal in einem Kantensignalspeicher (4) abspeichern und daß eine Bild-Steuerung (5) vorgesehen ist, welche für jeden Bildpunkt der wiederzugebenden Zeile zur Rückgewinnung von dessen Farbinformation in Abhängigkeit des aktuell ermittelten Kantensignals und des aus dem Kantensignalspeicher (1, 2) ausgelesenen Kantensignals eine Umschaltung zwischen dem Farbdifferenzsignal des korrespondierenden Bildpunktes der vorigen oder der nachfolgenden Zeile vornimmt.

12. Schaltungsanordnung nach Anspruch 10 zur Durchführung des Verfahrens nach Anspruch 8 und 9, dadurch gekennzeichnet, daß die in den beiden Zeilenspeichern (1, 2) abgespeicherten Werte der Farbdifferenzsignale zwecks Bildwiedergabe zeitlich verzögert ausgelesen werden, so daß eine in einer Bildzeile übertragenen Farbinformation mit einer zeitlichen Verzögerung der Dauer einer Bildzeile wiedergegeben wird, daß Mittel (3) vorgesehen sind, welche für jeden Bildpunkt der dargestellten Bildzeile die Berechnung der zweiten Wertedifferenz vornehmen, diese in einem Differenzwertspeicher abspeichern und daß eine Bild-Steuerung vorgesehen ist, welche für jeden Bildpunkt der wiederzugebenden Zeile zur Rückgewinnnung von dessen Farbinformation in Abhängigkeit dessen aktuell berechneter zweiter Wertedifferenz und der in dem Differenzwertspeicher abgespeicherten ersten Wertedifferenz gemäß der Kennlinie die relative Gewichtung der beiden Farbdifferenzsignale in der Summe vornimmt.

13. Schaltungsanordnung nach einem der Ansprüche 10 bis 12, dadurch gekennzeichnet, daß ein Zeilenspeicher (11) für das in dem Farbfernsehsignal enthaltene Helligkeitssignal vorgesehen ist, welcher dazu dient, das übertragene Helligkeitssignal ebenso wie die Farbinformation mit einer zeitlichen Verzögerung der Dauer einer Bildzeile zur Bildwiedergabe bereitzustellen.

14. Schaltungsanordnung nach Anspruch 11, dadurch gekennzeichnet, daß zur Umschaltung zwischen den Farbdifferenzsignalen der korrespondierenden Bildpunkte der vorigen oder der nachfolgenden Bildzeile zwei Multiplexer (6, 7) vorgesehen sind.

15. Schaltungsanordnung nach Anspruch 12, dadurch gekennzeichnet, daß zur relativen Gewichtung der beiden Farbdifferenzsignale den Zeilenspeichern je zwei Multiplizierer und ein Addierer nachgeschaltet sind.

16. Schaltungsanordnung nach einem der Ansprüche 10 bis 15,
dadurch gekennzeichnet, daß die Schaltungsanordnung einem Bildspeicher nachgeschaltet ist.

17. Schaltungsanordnung nach einem der Ansprüche 10 bis 16,
dadurch gekennzeichnet, daß Mittel zum Erkennen der Schaltphase der beiden Farbdifferenzsignale vorgesehen sind, welche die Größe der ermittelten Wertedifferenzen auswerten.

18. Schaltungsanordnung nach einem der Ansprüche 10 bis 17,
dadurch gekennzeichnet, daß die in den Zeilenspeichern (1, 2) abgespeicherten Bildpunkt-Daten auch Mitteln zur Berechnung von zusätzlichen Zwischen-Bildzeilen für eine Formatumwandlung des Fernsehsignals zugeführt werden.

FIG.1

FIG.2

FIG.3

FIG.4

| | | n−2 | n−1 | n | n+1 | n+2 | n+3 | n+4 |
|---|---|---|---|---|---|---|---|---|
| Received (field-) line | | n−2 | n−1 | n | n+1 | n+2 | n+3 | n+4 |
| Displayed (field-) line | | n−3 | n−2 | n−1 | n | n+1 | n+2 | n+3 |
| Line (U) (7 bit or 8 bit) | write | $U_{n-2}$ | | $U_n$ | | $U_{n+2}$ | | $U_{n+4}$ |
| | read | $U_{n-4}$ | $U_{n-2}$ | $U_{n-2}$ | $U_n$ | $U_n$ | $U_{n+2}$ | $U_{n+2}$ |
| Line (V) (7 bit or 8 bit) | write | | $V_{n-1}$ | | $V_{n+1}$ | | $V_{n+3}$ | |
| | read | $V_{n-3}$ | $V_{n-3}$ | $V_{n-1}$ | $V_{n-1}$ | $V_{n+1}$ | $V_{n+1}$ | $V_{n+3}$ |
| Edge Signal (1 bit) | write | $U_{n-2}, U_{n-4}$ | $V_{n-1}, V_{n-3}$ | $U_n, U_{n-2}$ | $V_{n+1}, V_{n-1}$ | $U_{n+2}, U_n$ | $V_{n+3}, V_{n+1}$ | $U_{n+4}, U_{n+2}$ |
| | read | $V_{n-3}, V_{n-5}$ | $U_{n-2}, U_{n-4}$ | $V_{n-1}, V_{n-3}$ | $U_n, U_{n-2}$ | $V_{n+1}, V_{n-1}$ | $U_{n+2}, U_n$ | $V_{n+3}, V_{n+1}$ |

FIG.5

EP 0 467 455 A2